# EUROPEAN PATENT SPECIFICATION

(11) **EP 3 550 646 B1**
(45) Date of publication and mention of the grant of the patent: **28.09.2022**
(21) Application number: 17875545.0
(22) Date of filing: 29.11.2017
(51) Int. Cl.: H01M 10/04, H01M 4/66, C01B 32/158, C09D 5/00, C09D 5/24, C09D 7/40, C09D 201/00, H01G 11/28, H01G 11/78, H01M 4/02, H01M 50/531, H01M 50/534, H01M 50/536

(54) **UNDERCOAT LAYER FOR ENERGY STORAGE DEVICE, AND UNDERCOAT FOIL FOR ENERGY STORAGE DEVICE ELECTRODE**
GRUNDIERUNGSSCHICHT FÜR ENERGIESPEICHERVORRICHTUNG UND GRUNDIERUNGSFOLIE FÜR DIE ELEKTRODE DER ENERGIESPEICHERVORRICHTUNG
SOUS-COUCHE POUR DISPOSITIF DE STOCKAGE D'ÉNERGIE, ET FEUILLE DE SOUS-COUCHE POUR ÉLECTRODE DE DISPOSITIF DE STOCKAGE D'ÉNERGIE

(30) Priority: 02.12.2016 JP 2016235180
(43) Date of publication of application: 09.10.2019
(73) Proprietor: Nissan Chemical Corporation, Tokyo 103-6119 (JP)
(72) Inventor: SHIBANO Yuki, Funabashi-shi Chiba 274-0052 (JP); HATANAKA Tatsuya, Funabashi-shi Chiba 274-0052 (JP); YOSHIMOTO Takuji, Funabashi-shi Chiba 274-0052 (JP)
(74) Representative: Mewburn Ellis LLP
(86) International application number: PCT/JP2017/042749
(87) International publication number: WO 2018/101305

(56) References cited:
- EP-A1- 2 680 286
- EP-A1- 2 988 351
- EP-A1- 3 386 021
- EP-A1- 3 401 981
- EP-A1- 3 401 982
- WO-A1-2010/025052
- WO-A1-2014/034113
- WO-A1-2014/042080
- WO-A1-2015/029949
- WO-A1-2016/194747
- JP-A- 2003 297 696
- JP-A- 2009 283 275
- JP-A- 2013 073 906
- JP-A- 2014 216 432
- US-A1- 2010 273 051

## Description

### TECHNICAL FIELD

The present invention relates to an energy storage device and an energy storage device electrode comprising an undercoat foil.

### BACKGROUND ART

There has been a desire in recent years to increase the capacity and the rate of charge and discharge of energy storage devices such as lithium-ion secondary batteries and electrical double-layer capacitors in order to accommodate their use in, for example, electric vehicles and electrically powered equipment.

One way to address this desire has been to place an undercoat layer between an active material layer and a current-collecting substrate, thereby strengthening adhesion between the active material layer and the current-collecting substrate and also lowering the resistance at the contact interface therebetween (see, for example, Patent Documents 1 and 2).

Generally, in an energy storage device, metal tabs are separately welded to the positive electrode and the negative electrode as terminals for drawing current from the positive and negative electrodes.

The metal tabs are typically welded to the current-collecting substrates. Even in an electrode where an undercoat layer has been formed, welding of the metal tab is carried out at a region on the current-collecting substrate where the undercoat layer and the active material layer have not been formed (see, for example, Patent Document 1).

Ways of forming a metal tab welding region on a current-collecting substrate having an undercoat layer formed thereon include the method of not forming the undercoat layer and the active material layer at the metal tab welding region of the current-collecting substrate, and the method of stripping off a portion of the undercoat layer and the active material layer that have been formed on the current-collecting substrate.

However, in cases where part of the undercoat layer is not formed, the current-collecting substrate has a lower versatility, making it necessary to prepare a different current-collecting substrate for each type of electrode. The other approach of stripping off the undercoat layer, etc. once it has been formed entails an additional step, which lowers the device productivity.

In particular, when a plurality of electrode plates are stacked in order to increase the device capacity, the problems associated with forming regions where, as noted above, the current-collecting substrates are exposed become even larger.

In light of this, art has been reported in which, when welding together a current-collecting substrate and a metal tab, welding is carried out at a region on the current-collecting substrate where an undercoat layer has been formed and an active material layer has not been formed (see, for example, Patent Document 3).

However, with the increasing desire lately for safety and productivity in products such as electric vehicles and electrically powered equipment, efforts are being made to achieve further progress in the art relating to electrical storage devices.

In particular, processes that can manufacture electrical storage devices having a higher productivity and a higher safety are strongly desired in this field because such processes can contribute directly to product manufacturing that satisfies the needs of the market in recent years for low cost and high safety.

Yet, the inventors have determined from investigations that, depending on the type of carbon material, reproducible ultrasonic welding is sometimes impossible using the manufacturing method of Patent Document 3, even in cases where the conditions for that method are satisfied.

Patent Document 4 discloses current collectors and methods that relate to electrodes that are useful in lithium polymer electrochemical cells. The current collectors include a metallic substrate, a substantially uniform nano-scale carbon coating, and an active electrode material. The coating has a maximum thickness of less than about 200 nm.

Patent Document 5 discloses a composite electrode and a method for manufacturing the same. By using a composite electrode that includes a porous support made of ceramic or metal and a conductive polymer or a metal oxide formed on a surface of the porous support, a capacitor or secondary cell that provides increased charge/discharge capacity and increased energy/output density, as well as high-temperature stability and high reliability, can be manufactured.

Patent Document 6 discloses a cathode foil for a solid electrolytic capacitor designed to increase capacitance, reduce ESR and leakage current, enhance heat resistance, and reduce production costs, while enhancing a power density, realizing rapid charging-discharging, and improving a life property, in an electric energy storage element such as a secondary battery, an electric double layer capacitor and a hybrid capacitor. Also disclosed is a cathode foil or a current collector comprising: a metal foil; and a metal layer, a mixed layer containing carbon and a substance composing the metal layer in a mixed state, and a carbon layer consisting substantially of carbon, each formed on the metal foil, is used. The mixed layer is configured to have a composition changing from a state containing substantially only the substance composing the metal layer to a state containing substantially only carbon, in a direction from the metal layer to the carbon layer.

Patent Document 7 discloses a conductive composition containing a conductive carbon material (A), a water-soluble resin binder (B), a water-dispersible resin particle binder (C) and an aqueous liquid medium (D), and is characterized in that, of the total 100wt% of solid content of the conductive carbon material (A), the water-soluble resin binder (B) and the water-dispersible resin particle binder (C), the content of the conductive carbon material (A) is 20-70wt%, and of the total 100 wt% of solid content of the water-soluble resin binder (B) and the water-dispersible resin particle binder (C), the content of the water-soluble resin binder (B) is greater than or equal to 3 wt% and less than 40 wt%.

Patent Document 8 discloses a nonaqueous secondary cell provided with: a positive electrode provided with a positive-electrode current-collecting substrate and a positive-electrode active material layer formed thereon, the positive-electrode active material layer being able to absorb or discharge lithium; a negative electrode provided with a negative-electrode current-collecting substrate and a negative-electrode active material layer formed thereon, the negative-electrode active material layer being able to absorb or discharge lithium; a separator interposed between the positive and negative electrodes; and a nonaqueous electrolyte solution. The nonaqueous electrolyte solution contains a sulfonyl imide electrolyte and a nonaqueous organic solvent. An electroconductive protective layer obtained by dispersing an electroconductive carbon material in a binder resin is formed on one or both surfaces of the positive-electrode current-collecting substrate and/or the negative-electrode current-collecting substrate.

Patent Document 9 discloses an electrode for energy storage devices, which is provided with a collector substrate, an undercoat layer that is formed on at least one surface of the collector substrate and contains carbon nanotubes, and an active material layer that is formed on the surface of the undercoat layer, and wherein the active material layer does not contain a conductive assistant.

Patent Document 10 discloses an electrode for energy storage devices, which is provided with: a collector substrate; an undercoat layer that is formed on at least one surface of the collector substrate and contains carbon nanotubes; and an active material layer that is formed on the surface of the undercoat layer and contains an active material which contains a titanium-containing oxide.

### PRIOR ART DOCUMENTS

### PATENT DOCUMENTS

Patent Document 1: JP-A 2010-170965
Patent Document 2: WO 2014/042080
Patent Document 3: WO 2014/034113
Patent Document 4: WO 2010/025052
Patent Document 5: US 2010/273051
Patent Document 6: EP 2 680 286
Patent Document 7: EP 2 988 351
Patent Document 8: EP 3 386 021
Patent Document 9: EP 3 401 981
Patent Document 10: EP 3 401 982

### TECHNICAL PROBLEM

The present invention was arrived at in light of the above circumstances. An object of the invention is to provide an undercoat layer for energy storage device electrodes that can be ultrasonically welded and that gives low-resistance energy storage devices, and an undercoat foil for energy storage devices that includes such an undercoat layer.

### SOLUTION TO PROBLEM

The inventors have conducted extensive investigations from the standpoint of the weldability of the undercoat layer and aimed at lowering the resistance of devices having such an undercoat layer. As a result, they have discovered that by setting the thickness of an undercoat layer formed on at least one side of a current-collecting substrate within a specific range, efficient ultrasonic welding is possible at regions on the current-collecting substrate where the undercoat layer has been formed, and moreover that a low-resistance energy storage device can be obtained even when an electrode provided with an undercoat foil having an undercoat layer of a thickness in this specific range is used.

Accordingly, the invention is set out in the claims.

### ADVANTAGEOUS EFFECTS OF INVENTION

This invention is able to provide an energy storage device electrode comprising an undercoat foil layer , which foil can be efficiently ultrasonically welded. By using an electrode having this undercoat foil, low-resistance energy storage devices and a simple and efficient method for producing such devices can be provided.

### DESCRIPTION OF EMBODIMENTS

The present invention is described more fully below.

The undercoat layer for an energy storage device electrode according to the present invention (referred to below as "the undercoat layer") is characterized by having a thickness of from 1 to 200 nm and includes carbon nanotubes and a dispersant.

This undercoat layer, as subsequently described, is formed on at least one side of a current-collecting substrate serving as a constituent member of an energy storage device electrode, and makes up part of the electrode.

The energy storage device in this invention is exemplified by various types of energy storage devices, including electrical double-layer capacitors, lithium secondary batteries, lithium-ion secondary batteries, proton polymer batteries, nickel-hydrogen batteries, aluminum solid capacitors, electrolytic capacitors and lead storage batteries. The undercoat layer of the invention is particularly well-suited for use in electrical double-layer capacitors and lithium-ion secondary batteries.

The undercoat layer of the present invention includes From the standpoint of forming a uniform thin film, CNTs are used.

Carbon nanotubes are generally produced by an arc discharge process, chemical vapor deposition (CVD), laser ablation or the like. The CNTs used in this invention may be obtained by any of these methods. CNTs are categorized as single-walled CNTs consisting of a single cylindrically rolled graphene sheet (abbreviated below as "SWCNTs"), double-walled CNTs consisting of two concentrically rolled graphene sheets (abbreviated below as "DWCNTs"), and multi-walled CNTs consisting of a plurality of concentrically rolled graphite sheets (abbreviated below as "MWCNTs"). SWCNTs, DWCNTs or MWCNTs may be used alone in the invention, or a plurality of these types of CNTs may be used in combination.

When SWCNTs, DWCNTs or MWCNTs are produced by the above methods, catalyst metals such as nickel, iron, cobalt or yttrium may remain in the product, and so purification to remove these impurities is sometimes necessary. Acid treatment with nitric acid, sulfuric acid or the like and ultrasonic treatment are effective for the removal of impurities. However, in acid treatment with nitric acid, sulfuric acid or the like, there is a possibility of the π-conjugated system making up the CNTs being destroyed and the properties inherent to the CNTs being lost. It is thus desirable for the CNTs to be purified and used under suitable conditions.

Specific examples of CNTs that may be used in the invention include CNTs synthesized by the super growth method (available from the New Energy and Industrial Technology Development Organization (NEDO) in the National Research and Development Agency), eDIPS-CNTs (available from NEDO in the National Research and Development Agency), the SWNT series (available under this trade name from Meijo Nano Carbon), the VGCF series (available under this trade name from Showa Denko KK), the FloTube series (available under this trade name from CNano Technology), AMC (available under this trade name from Ube Industries, Ltd.), the NANOCYL NC7000 series (available under this trade name from Nanocyl S.A.), Baytubes (available under this trade name from Bayer), GRAPHISTRENGTH (available under this trade name from Arkema), MWNT7 (available under this trade name from Hodogaya Chemical Co., Ltd.) and Hyperion CNT (available under this trade name from Hyperion Catalysis International).

The undercoat layer of the invention is preferably produced by using a conductive material-containing composition (dispersion) which includes CNTs, and a solvent.

The solvent is not particularly limited, provided it is one that has hitherto been used to prepare CNT or other conductive material-containing compositions. Illustrative examples include water and the following organic solvents: ethers such as tetrahydrofuran (THF), diethyl ether and 1,2-dimethoxyethane (DME); halogenated hydrocarbons such as methylene chloride, chloroform and 1,2-dichloroethane; amides such as N,N-dimethylformamide (DMF), N,N-dimethylacetamide (DMAc) and N-methyl-2-pyrrolidone (NMP); ketones such as acetone, methyl ethyl ketone, methyl isobutyl ketone and cyclohexanone; alcohols such as methanol, ethanol, isopropanol and n-propanol; aliphatic hydrocarbons such as n-heptane, n-hexane and cyclohexane; aromatic hydrocarbons such as benzene, toluene, xylene and ethylbenzene; glycol ethers such as ethylene glycol monoethyl ether, ethylene glycol monobutyl ether and propylene glycol monomethyl ether; and glycols such as ethylene glycol and propylene glycol. These solvents may be used singly, or two or more may be used in admixture.

In terms of being able to increase the proportion of CNTs that are individually dispersed, water, NMP, DMF, THF, methanol and isopropanol are especially preferred. These solvents may be used singly, or two or more may be used in admixture.

In addition, the conductive material-containing composition may optionally include a matrix polymer.

Illustrative examples of the matrix polymer include the following thermoplastic resins: fluoropolymers such as polyvinylidene fluoride (PVdF), polytetrafluoroethylene, tetrafluoroethylene-hexafluoropropylene copolymers, vinylidene fluoride-hexafluoropropylene copolymers (P(VDF-HFP)) and vinylidene fluoride-chlorotrifluoroethylene copolymers (P(VDF-CTFE)); polyolefin resins such as polyvinylpyrrolidone, ethylene-propylene-diene ternary copolymers, polyethylene (PE), polypropylene (PP), ethylene-vinyl acetate copolymers (EVA) and ethylene-ethyl acrylate copolymers (EEA); polystyrene resins such as polystyrene (PS), high-impact polystyrene (HIPS), acrylonitrile-styrene copolymers (AS), acrylonitrile-butadiene-styrene copolymers (ABS), methyl methacrylate-styrene copolymers (MS) and styrene-butadiene rubbers; polycarbonate resins, vinyl chloride resins, polyamide resins, polyimide resins, (meth)acrylic resins such as polyacrylic acid, ammonium polyacrylate, sodium polyacrylate and polymethyl methacrylate (PMMA), polyester resins such as polyethylene terephthalate (PET), polybutylene terephthalate, polyethylene naphthalate, polybutylene naphthalate, polylactic acid (PLA), poly-3-hydroxybutyric acid, polycaprolactone, polybutylene succinate and polyethylene succinate/adipate; polyphenylene ether resins, modified polyphenylene ether resins, polyacetal resins, polysulfone resins, polyphenylene sulfide resins, polyvinyl alcohol resins, polyglycolic acids, modified starches, cellulose acetate, carboxymethylcellulose, cellulose triacetate; chitin, chitosan and lignin; the following electrically conductive polymers: polyaniline and emeraldine base (the semi-oxidized form of polyaniline), polythiophene, polypyrrole, polyphenylene vinylene, polyphenylene and polyacetylene; and the following thermoset or photocurable resins: epoxy resins, urethane acrylate, phenolic resins, melamine resins, urea resins and alkyd resins. Because it is desirable to use water as the solvent in the conductive CNT dispersion of the invention, the matrix polymer is preferably a water-soluble polymer such as polyacrylic acid, ammonium polyacrylate, sodium polyacrylate, carboxymethylcellulose sodium, water-soluble cellulose ether, sodium alginate, polyvinyl alcohol, polystyrene sulfonic acid or polyethylene glycol. Polyacrylic acid, ammonium polyacrylate, sodium polyacrylate and carboxymethylcellulose sodium are especially preferred.

The matrix polymer may be acquired as a commercial product. Illustrative examples of such commercial products include Aron A-10H (polyacrylic acid; available from Toagosei Co., Ltd. as an aqueous solution having a solids concentration of 26%), Aron A-30 (ammonium polyacrylate; available from Toagosei Co., Ltd. as an aqueous solution having a solids concentration of 32%), sodium polyacrylate (Wako Pure Chemical Industries Co., Ltd.; degree of polymerization, 2,700 to 7,500), carboxymethylcellulose sodium (Wako Pure Chemical Industries, Ltd.), sodium alginate (Kanto Chemical Co., Ltd.; extra pure reagent), the Metolose SH Series (hydroxypropylmethyl cellulose, from Shin-Etsu Chemical Co., Ltd.), the Metolose SE Series (hydroxyethylmethyl cellulose, from Shin-Etsu Chemical Co., Ltd.), JC-25 (a fully saponified polyvinyl alcohol, from Japan Vam & Poval Co., Ltd.), JM-17 (an intermediately saponified polyvinyl alcohol, from Japan Vam & Poval Co., Ltd.), JP-03 (a partially saponified polyvinyl alcohol, from Japan Vam & Poval Co., Ltd.) and polystyrenesulfonic acid (from Aldrich Co.; solids concentration, 18 wt%; aqueous solution).

The matrix polymer content, although not particularly limited, is preferably set to from about 0.0001 to about 99 wt%, and more preferably from about 0.001 to about 90 wt%, of the composition.

In addition, in order to increase the dispersibility of the CNTs in the composition, the conductive material-containing composition preferably includes a dispersant.

The dispersant is not particularly limited and may be suitably selected from among known dispersants. Illustrative examples include carboxymethylcellulose (CMC), polyvinylpyrrolidone (PVP), acrylic resin emulsions, water-soluble acrylic polymers, styrene emulsions, silicone emulsions, acrylic silicone emulsions, fluoropolymer emulsions, EVA emulsions, vinyl acetate emulsions, vinyl chloride emulsions, urethane resin emulsions, the triarylamine-based highly branched polymers mentioned in WO 2014/04280, and the pendant oxazoline group-containing vinyl polymers mentioned in WO 2015/029949. In this invention, the triarylamine-based highly branched polymers mentioned in WO 2014/04280 and the pendant oxazoline group-containing vinyl polymers mentioned in WO 2015/029949 are preferred.

Specifically, preferred use can be made of the highly branched polymers of formula (1) and (2) below obtained by the condensation polymerization of a triarylamine with an aldehyde and/or a ketone under acidic conditions.

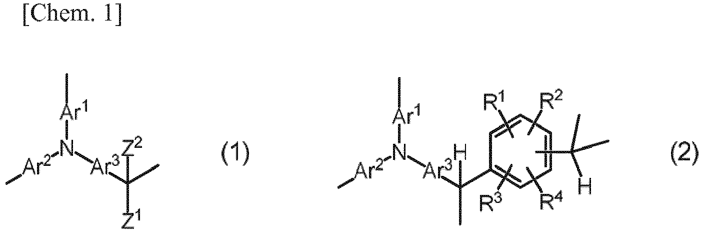

In formulas (1) and (2), Ar¹ to Ar³ are each independently a divalent organic group of any one of formulas (3) to (7), and are preferably a substituted or unsubstituted phenylene group of formula (3).

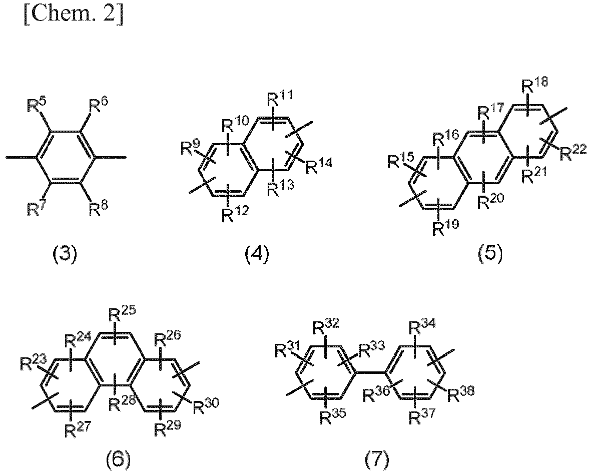

In these formulas, R⁵ to R³⁸ are each independently a hydrogen atom, a halogen atom, an alkyl group of 1 to 5 carbon atoms which may have a branched structure, an alkoxy group of 1 to 5 carbon atoms which may have a branched structure, a carboxyl group, a sulfo group, a phosphoric acid group, a phosphonic acid group, or a salt thereof.

In formulas (1) and (2), Z¹ and Z² are each independently a hydrogen atom, an alkyl group of 1 to 5 carbon atoms which may have a branched structure, or a monovalent organic group of any one of formulas (8) to (11) (provided that Z¹ and Z² are not both alkyl groups), with Z¹ and Z² preferably being each independently a hydrogen atom, a 2- or 3-thienyl group or a group of formula (8). It is especially preferable for one of Z¹ and Z² to be a hydrogen atom and for the other to be a hydrogen atom, a 2- or 3-thienyl group, or a group of formula (8), especially one in which R⁴¹ is a phenyl group or one in which R⁴¹ is a methoxy group.

In cases where R⁴¹ is a phenyl group, when the technique of inserting an acidic group following polymer production is used in the subsequently described acidic group insertion method, the acidic group is sometimes inserted onto this phenyl group.

The alkyl groups which may have a branched structure of 1 to 5 carbon atoms are exemplified in the same way as those mentioned above.

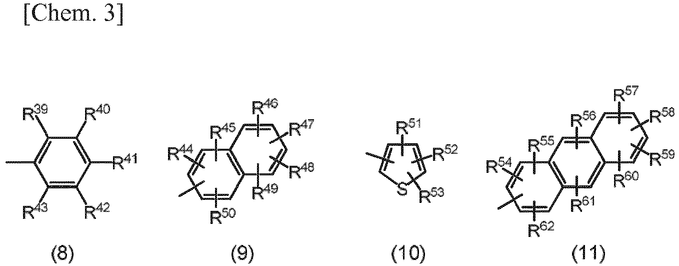

In these formulas, R³⁹ to R⁶² are each independently a hydrogen atom, a halogen atom, an alkyl group of 1 to 5 carbon atoms which may have a branched structure, a haloalkyl group of 1 to 5 carbon atoms which may have a branched structure, a phenyl group, OR⁶³, COR⁶³, NR⁶³R⁶⁴, COOR⁶⁵ (wherein R⁶³ and R⁶⁴ are each independently a hydrogen atom, an alkyl group of 1 to 5 carbon atoms which may have a branched structure, a haloalkyl group of 1 to 5 carbon atoms which may have a branched structure, or a phenyl group; and R⁶⁵ is an alkyl group of 1 to 5 carbon atoms which may have a branched structure, a haloalkyl group of 1 to 5 carbon atoms which may have a branched structure, or a phenyl group), a carboxyl group, a sulfo group, a phosphoric acid group, a phosphonic acid group, or a salt thereof.

In formulas (2) to (7), R¹ to R³⁸ are each independently a hydrogen atom, a halogen atom, an alkyl group of 1 to 5 carbon atoms which may have a branched structure, an alkoxy group of 1 to 5 carbon atoms which may have a branched structure, a carboxyl group, a sulfo group, a phosphoric acid group, a phosphonic acid group, or a salt thereof.

Here, examples of halogen atoms include fluorine, chlorine, bromine and iodine atoms.

Illustrative examples of alkyl groups of 1 to 5 carbon atoms that may have a branched structure include methyl, ethyl, n-propyl, isopropyl, n-butyl, sec-butyl, tert-butyl and n-pentyl groups.

Illustrative examples of alkoxy group of 1 to 5 carbon atoms that may have a branched structure include methoxy, ethoxy, n-propoxy, isopropoxy, n-butoxy, sec-butoxy, tert-butoxy and n-pentoxy groups.

Exemplary salts of carboxyl groups, sulfo groups, phosphoric acid groups and phosphonic acid groups include sodium, potassium and other alkali metal salts; magnesium, calcium and other Group 2 metal salts, ammonium salts; propylamine, dimethylamine, triethylamine, ethylenediamine and other aliphatic amine salts; imidazoline, piperazine, morpholine and other alicyclic amine salts; aniline, diphenylamine and other aromatic amine salts; and pyridinium salts.

In formulas (8) to (11) above, R³⁹ to R⁶² are each independently a hydrogen atom, a halogen atom, an alkyl group of 1 to 5 carbon atoms which may have a branched structure, a haloalkyl group of 1 to 5 carbon atoms which may have a branched structure, a phenyl group, OR⁶³, COR⁶³, NR⁶³R⁶⁴, COOR⁶⁵ (wherein R⁶³ and R⁶⁴ are each independently a hydrogen atom, an alkyl group of 1 to 5 carbon atoms which may have a branched structure, a haloalkyl group of 1 to 5 carbon atoms which may have a branched structure, or a phenyl group; and R⁶⁵ is an alkyl group of 1 to 5 carbon atoms which may have a branched structure, a haloalkyl group of 1 to 5 carbon atoms which may have a branched structure, or a phenyl group), a carboxyl group, a sulfo group, a phosphoric acid group, a phosphonic acid group, or a salt thereof.

Here, illustrative examples of the haloalkyl group of 1 to 5 carbon atoms which may have a branched structure include difluoromethyl, trifluoromethyl, bromodifluoromethyl, 2-chloroethyl, 2-bromoethyl, 1,1-difluoroethyl, 2,2,2-trifluoroethyl, 1,1,2,2-tetrafluoroethyl, 2-chloro-1,1,2-trifluoroethyl, pentafluoroethyl, 3-bromopropyl, 2,2,3,3-tetrafluoropropyl, 1,1,2,3,3,3-hexafluoropropyl, 1,1,1,3,3,3-hexafluoropropan-2-yl, 3-bromo-2-methylpropyl, 4-bromobutyl and perfluoropentyl groups.

The halogen atoms and the alkyl groups of 1 to 5 carbon atoms which may have a branched structure are exemplified in the same way as the groups represented by above formulas (2) to (7).

In particular, to further increase adherence to the current-collecting substrate, the highly branched polymer is preferably one having, on at least one aromatic ring in the recurring unit of formula (1) or (2), at least one type of acidic group selected from among carboxyl, sulfo, phosphoric acid and phosphonic acid groups and salts thereof, and more preferably one having a sulfo group or a salt thereof.

Illustrative examples of aldehyde compounds that may be used to prepare the highly branched polymer include saturated aliphatic aldehydes such as formaldehyde, p-formaldehyde, acetaldehyde, propylaldehyde, butyraldehyde, isobutyraldehyde, valeraldehyde, caproaldehyde, 2-methylbutyraldehyde, hexylaldehyde, undecylaldehyde, 7-methoxy-3,7-dimethyloctylaldehyde, cyclohexanecarboxyaldehyde, 3-methyl-2-butyraldehyde, glyoxal, malonaldehyde, succinaldehyde, glutaraldehyde and adipinaldehyde; unsaturated aliphatic aldehydes such as acrolein and methacrolein; heterocyclic aldehydes such as furfural, pyridinealdehyde and thiophenealdehyde; aromatic aldehydes such as benzaldehyde, tolylaldehyde, trifluoromethylbenzaldehyde, phenylbenzaldehyde, salicylaldehyde, anisaldehyde, acetoxybenzaldehyde, terephthalaldehyde, acetylbenzaldehyde, formylbenzoic acid, methyl formylbenzoate, aminobenzaldehyde, N,N-dimethylaminobenzaldehyde, N,N-diphenylaminobenzaldehyde, naphthaldehyde, anthraldehyde and phenanthraldehyde; and aralkylaldehydes such as phenylacetaldehyde and 3-phenylpropionaldehyde. Of these, the use of aromatic aldehydes is preferred.

Ketone compounds that may be used to prepare the highly branched polymer are exemplified by alkyl aryl ketones and diaryl ketones. Illustrative examples include acetophenone propiophenone, diphenyl ketone, phenyl naphthyl ketone, dinaphthyl ketone, phenyl tolyl ketone and ditolyl ketone.

The highly branched polymer that may be used in the invention is obtained, as shown in Scheme 1 below, by the condensation polymerization of a triarylamine compound, such as one of formula (A) below that is capable of furnishing the aforementioned triarylamine skeleton, with an aldehyde compound and/or a ketone compound, such as one of formula (B) below, in the presence of an acid catalyst.

In cases where a difunctional compound (C) such as a phthalaldehyde (e.g., terephthalaldehyde) is used as the aldehyde compound, not only does the reaction shown in Scheme 1 arise, the reaction shown in Scheme 2 below also arises, giving a highly branched polymer having a crosslinked structure in which the two functional groups both contribute to the condensation reaction. 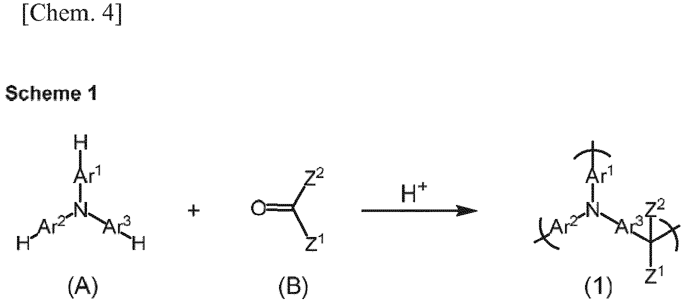 (wherein Ar¹ to Ar³ and both Z¹ and Z² are the same as defined above) 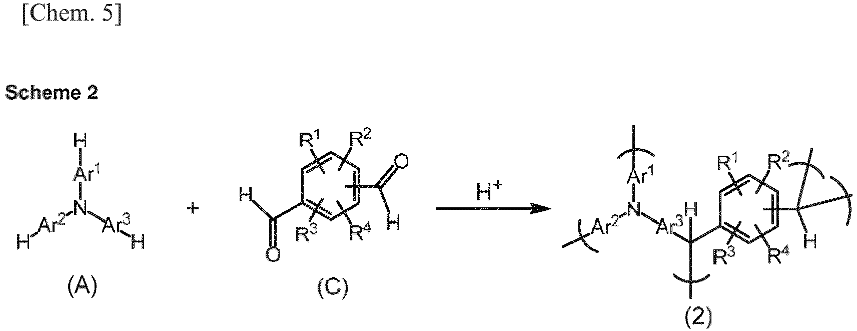 (wherein Ar¹ to Ar³ and R¹ to R⁴ are the same as defined above)

In the condensation polymerization reaction, the aldehyde compound and/or ketone compound may be used in a ratio of from 0.1 to 10 equivalents per equivalent of aryl groups on the triarylamine compound.

The acid catalyst used may be, for example, a mineral acid such as sulfuric acid, phosphoric acid or perchloric acid; an organic sulfonic acid such as p-toluenesulfonic acid or p-toluenesulfonic acid monohydrate; or a carboxylic acid such as formic acid or oxalic acid.

The amount of acid catalyst used, although variously selected according to the type thereof, is generally from 0.001 to 10,000 parts by weight, preferably from 0.01 to 1,000 parts by weight, and more preferably from 0.1 to 100 parts by weight, per 100 parts by weight of the triarylamine.

The condensation reaction may be carried out without a solvent, although it is generally carried out using a solvent. Any solvent that does not hinder the reaction may be used for this purpose. Illustrative examples include cyclic ethers such as tetrahydrofuran and 1,4-dioxane; amides such as N,N-dimethylformamide (DMF), N,N-dimethylacetamide (DMAc) and N-methyl-2-pyrrolidone (NMP); ketones such as methyl isobutyl ketone and cyclohexanone; halogenated hydrocarbons such as methylene chloride, chloroform, 1,2-dichloroethane and chlorobenzene; and aromatic hydrocarbons such as benzene, toluene and xylene. Cyclic ethers are especially preferred. These solvents may be used singly, or two or more may be used in admixture.

If the acid catalyst used is a liquid compound such as formic acid, the acid catalyst may also fulfill the role of a solvent.

The reaction temperature during condensation is generally between 40°C and 200°C. The reaction time may be variously selected according to the reaction temperature, but is generally from about 30 minutes to about 50 hours.

The weight-average molecular weight Mw of the polymer obtained as described above is generally from 1,000 to 2,000,000, and preferably from 2,000 to 1,000,000.

When acidic groups are introduced onto the highly branched polymer, this may be done by a method that involves first introducing the acidic groups onto aromatic rings of the above triarylamine compound, aldehyde compound and ketone compound serving as the polymer starting materials, then using this to synthesize the highly branched polymer; or by a method that involves treating the highly branched polymer following synthesis with a reagent that is capable of introducing acidic groups onto the aromatic rings. From the standpoint of the ease and simplicity of production, use of the latter approach is preferred.

In the latter approach, the technique used to introduce acidic groups onto the aromatic rings is not particularly limited, and may be suitably selected from among various known methods according to the type of acidic group.

For example, in cases where sulfo groups are introduced, use may be made of a method that involves sulfonation using an excess amount of sulfuric acid.

The average molecular weight of the highly branched polymer is not particularly limited, although the weight-average molecular weight is preferably from 1,000 to 2,000,000, and more preferably from 2,000 to 1,000,000.

The weight-average molecular weights in this invention are polystyrene-equivalent measured values obtained by gel permeation chromatography.

Specific examples of the highly branched polymer include, but are not limited to, those having the following formulas.

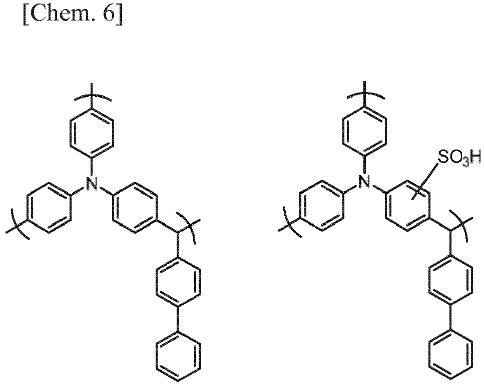

The pendant oxazoline group-containing vinyl polymer (referred to below as the "oxazoline polymer") is preferably a polymer which is obtained by the radical polymerization of an oxazoline monomer of formula (12) having a polymerizable carbon-carbon double bond-containing group at the 2 position, and which has repeating units that are bonded at the 2 position of the oxazoline ring to the polymer backbone or to spacer groups.

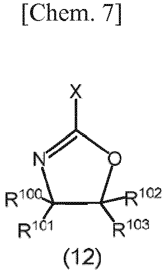

Here, X represents a polymerizable carbon-carbon double bond-containing group, and R¹⁰⁰ to R¹⁰³ are each independently a hydrogen atom, a halogen atom, an alkyl group of 1 to 5 carbon atoms that may have a branched structure, an aryl group of 6 to 20 carbon atoms, or an aralkyl group of 7 to 20 carbon atoms.

The polymerizable carbon-carbon double bond-containing group on the oxazoline monomer is not particularly limited, so long as it includes a polymerizable carbon-carbon double bond. However, an acyclic hydrocarbon group containing a polymerizable carbon-carbon double bond is preferable. For example, alkenyl groups having from 2 to 8 carbon atoms, such as vinyl, allyl and isopropenyl groups, are preferred.

The halogen atoms and the alkyl groups of 1 to 5 carbon atoms which may have a branched structure are exemplified in the same way as above.

Illustrative examples of aryl groups of 6 to 20 carbon atoms include phenyl, xylyl, tolyl, biphenyl and naphthyl groups.

Illustrative examples of aralkyl groups of 7 to 20 carbon atoms include benzyl, phenyl ethyl and phenylcyclohexyl groups.

Illustrative examples of the oxazoline monomer having a polymerizable carbon-carbon double bond-containing group at the 2 position shown in formula (12) include 2-vinyl-2-oxazoline, 2-vinyl-4-methyl-2-oxazoline, 2-vinyl-4-ethyl-2-oxazoline, 2-vinyl-4-propyl-2-oxazoline, 2-vinyl-4-butyl-2-oxazoline, 2-vinyl-5-methyl-2-oxazoline, 2-vinyl-5-ethyl-2-oxazoline, 2-vinyl-5-propyl-2-oxazoline, 2-vinyl-5-butyl-2-oxazoline, 2-isopropenyl-2-oxazoline, 2-isopropenyl-4-methyl-2-oxazoline, 2-isopropenyl-4-ethyl-2-oxazoline, 2-isopropenyl-4-propyl-2-oxazoline, 2-isopropenyl-4-butyl-2-oxazoline, 2-isopropenyl-5-methyl-2-oxazoline, 2-isopropenyl-5-ethyl-2-oxazoline, 2-isopropenyl-5-propyl-2-oxazoline and 2-isopropenyl-5-butyl-2-oxazoline. In terms of availability, 2-isopropenyl-2-oxazoline is preferred.

Also, from the standpoint of preparing the conductive material-containing composition using an aqueous solvent, it is preferable for the oxazoline polymer to be water-soluble.

Such a water-soluble oxazoline polymer may be a homopolymer of the oxazoline monomer of formula (12) above. However, to further increase the solubility in water, the polymer is preferably one obtained by the radical polymerization of at least two types of monomer: the above oxazoline monomer, and a hydrophilic functional group-containing (meth)acrylic ester monomer.

Illustrative examples of hydrophilic functional group-containing (meth)acrylic monomers include (meth)acrylic acid, 2-hydroxyethyl acrylate, methoxy polyethylene glycol acrylate, monoesters of acrylic acid with polyethylene glycol, 2-aminoethyl acrylate and salts thereof, 2-hydroxyethyl methacrylate, methoxy polyethylene glycol methacrylate, monoesters of methacrylic acid with polyethylene glycol, 2-aminoethyl methacrylate and salts thereof, sodium (meth)acrylate, ammonium (meth)acrylate, (meth)acrylonitrile, (meth)acrylamide, N-methylol (meth)acrylamide, N-(2-hydroxyethyl) (meth)acrylamide and sodium styrenesulfonate. These may be used singly, or two or more may be used in combination. Of these, methoxy polyethylene glycol (meth)acrylate and monoesters of (meth)acrylic acid with polyethylene glycol are preferred.

Concomitant use may be made of monomers other than the oxazoline monomer and the hydrophilic functional group-containing (meth)acrylic monomer, provided that doing so does not adversely affect the ability of the oxazoline polymer to disperse the CNTs Illustrative examples of such other monomers include (meth)acrylic ester monomers such as methyl (meth)acrylate, ethyl (meth)acrylate, butyl (meth)acrylate, 2-ethylhexyl (meth)acrylate, stearyl (meth)acrylate, perfluoroethyl (meth)acrylate and phenyl (meth)acrylate; α-olefin monomers such as ethylene, propylene, butene and pentene; haloolefin monomers such as vinyl chloride, vinylidene chloride and vinyl fluoride; styrene monomers such as styrene and α-methyl styrene; vinyl carboxylate monomers such as vinyl acetate and vinyl propionate; and vinyl ether monomers such as methyl vinyl ether and ethyl vinyl ether. These may each be used singly, or two or more may be used in combination.

To further increase the CNT dispersing ability of the resulting oxazoline polymer, the content of oxazoline monomer in the monomer ingredients used to prepare the oxazoline polymer employed in the invention is preferably at least 10 wt%, more preferably at least 20 wt%, and even more preferably at least 30 wt%. The upper limit in the content of the oxazoline monomer in the monomer ingredients is 100 wt%, in which case a homopolymer of the oxazoline monomer is obtained.

To further increase the water solubility of the resulting oxazoline polymer, the content of the hydrophilic functional group-containing (meth)acrylic monomer in the monomer ingredients is preferably at least 10 wt%, more preferably at least 20 wt%, and even more preferably at least 30 wt%.

As mentioned above, the content of other monomers in the monomer ingredients is in a range that does not affect the ability of the resulting oxazoline polymer to disperse the CNTs . This content differs according to the type of monomer and thus cannot be strictly specified, but may be suitably set in a range of from 5 to 95 wt%, and preferably from 10 to 90 wt%.

The average molecular weight of the oxazoline polymer is not particularly limited, although the weight-average molecular weight is preferably from 1,000 to 2,000,000, and more preferably from 2,000 to 1,000,000.

The oxazoline polymer that may be used in this invention can be synthesized by a known radical polymerization of the above monomers or may be acquired as a commercial product. Illustrative examples of such commercial products include Epocros WS-300 (from Nippon Shokubai Co., Ltd.; solids concentration, 10 wt%; aqueous solution), Epocros WS-700 (Nippon Shokubai Co., Ltd.; solids concentration, 25 wt%; aqueous solution), Epocros WS-500 (Nippon Shokubai Co., Ltd.; solids concentration, 39 wt%; water/1-methoxy-2-propanol solution), Poly(2-ethyl-2-oxazoline) (Aldrich), Poly(2-ethyl-2-oxazoline) (Alfa Aesar) and Poly(2-ethyl-2-oxazoline) (VWR International, LLC).

When the oxazoline polymer is commercially available as a solution, the solution may be used directly as is or may be used after replacing the solvent with a target solvent.

The mixing ratio of the CNTs and the dispersant in the conductive material-containing composition used in the invention, expressed as a weight ratio, is preferably from about 1,000:1 to about 1:100.

The concentration of dispersant in the composition is not particularly limited, provided that it is a concentration which enables the CNTs to disperse in the solvent. However, the concentration in the composition is preferably set to from about 0.001 to about 30 wt%, and more preferably to from about 0.002 to about 20 wt%.

The concentration of CNTs in the composition varies according to the thickness of the target undercoat layer and the required mechanical, electrical and thermal characteristics, and may be any concentration at which at least some portion of the CNTs individually disperse and the undercoat layer can be produced at the thickness specified in this invention. The concentration of CNTs in the composition is preferably from about 0.0001 to about 50 wt%, more preferably from about 0.001 to about 20 wt%, and even more preferably from about 0.001 to about 10 wt%.

The conductive material-containing composition used in the invention may include a crosslinking agent that gives rise to a crosslinking reaction with the dispersant used, or a crosslinking agent that is self-crosslinking. These crosslinking agents preferably dissolve in the solvent that is used.

Crosslinking agents of triarylamine-based highly branched polymers are exemplified by melamine crosslinking agents, substituted urea crosslinking agents, and crosslinking agents which are polymers thereof. These crosslinking agents may be used singly, or two or more may be used in admixture. A crosslinking agent having at least two crosslink-forming substituents is preferred. Illustrative examples of such crosslinking agents include compounds such as CYMEL^{®}, methoxymethylated glycoluril, butoxymethylated glycoluril, methylolated glycoluril, methoxymethylated melamine, butoxymethylated melamine, methylolated melamine, methoxymethylated benzoguanamine, butoxymethylated benzoguanamine, methylolated benzoguanamine, methoxymethylated urea, butoxymethylated urea, methylolated urea, methoxymethylated thiourea, methoxymethylated thiourea and methylolated thiourea, as well as condensates of these compounds.

The oxazoline polymer crosslinking agent is not particularly limited, provided that it is a compound having two or more functional groups that react with oxazoline groups, such as carboxyl, hydroxyl, thiol, amino, sulfinic acid and epoxy groups. A compound having two or more carboxyl groups is preferred. A compound which has functional groups such as the sodium, potassium, lithium or ammonium salts of carboxylic acids that, under heating during thin-film formation or in the presence of an acid catalyst, generate the above functional groups and give rise to crosslinking reactions, may also be used as the crosslinking agent.

Examples of compounds which give rise to crosslinking reactions with oxazoline groups include the metal salts of synthetic polymers such as polyacrylic acid and copolymers thereof or of natural polymers such as carboxymethylcellulose or alginic acid which exhibit crosslink reactivity in the presence of an acid catalyst, and ammonium salts of these same synthetic polymers and natural polymers which exhibit crosslink reactivity under heating. Sodium polyacrylate, lithium polyacrylate, ammonium polyacrylate, carboxymethylcellulose sodium, carboxymethylcellulose lithium and carboxymethylcellulose ammonium, which exhibit crosslink reactivity in the presence of an acid catalyst or under heating conditions, are especially preferred.

These compounds that give rise to crosslinking reactions with oxazoline groups may be acquired as commercial products. Examples of such commercial products include sodium polyacrylate (Wako Pure Chemical Industries, Ltd.; degree of polymerization, 2,700 to 7,500), carboxymethylcellulose sodium (Wako Pure Chemical Industries, Ltd.), sodium alginate (Kanto Chemical Co., Ltd.; extra pure reagent), Aron A-30 (ammonium polyacrylate, from Toagosei Co., Ltd.; solids concentration, 32 wt%; aqueous solution), DN-800H (carboxymethylcellulose ammonium, from Daicel FineChem, Ltd.) and ammonium alginate (Kimica Corporation).

Examples of crosslinking agents that are self-crosslinking include compounds having, on the same molecule, crosslinkable functional groups which react with one another, such as a hydroxyl group with an aldehyde group, epoxy group, vinyl group, isocyanate group or alkoxy group; a carboxyl group with an aldehyde group, amino group, isocyanate group or epoxy group; or an amino group with an isocyanate group or aldehyde group; and compounds having like crosslinkable functional groups which react with one another, such as hydroxyl groups (dehydration condensation), mercapto groups (disulfide bonding), ester groups (Claisen condensation), silanol groups (dehydration condensation), vinyl groups and acrylic groups.

Specific examples of crosslinking agents that are self-crosslinking include any of the following which exhibit crosslink reactivity in the presence of an acid catalyst: polyfunctional acrylates, tetraalkoxysilanes, and block copolymers of a blocked isocyanate group-containing monomer and a monomer having at least one hydroxyl, carboxyl or amino group.

Such self-crosslinking compounds may be acquired as commercial products. Examples of commercial products include polyfunctional acrylates such as A-9300 (ethoxylated isocyanuric acid triacrylate, from Shin-Nakamura Chemical Co., Ltd.), A-GLY-9E (Ethoxylated glycerine triacrylate (EO 9 mol), from Shin-Nakamura Chemical Co., Ltd.) and A-TMMT (pentaerythritol tetraacrylate, from Shin-Nakamura Chemical Co., Ltd.); tetraalkoxysilanes such as tetramethoxysilane (Tokyo Chemical Industry Co., Ltd.) and tetraethoxysilane (Toyoko Kagaku Co., Ltd.); and blocked isocyanate group-containing polymers such as the Elastron Series E-37, H-3, H38, BAP, NEW BAP-15, C-52, F-29, W-11P, MF-9 and MF-25K (DKS Co., Ltd.).

The amount in which these crosslinking agents is added varies according to, for example, the solvent to be used, the substrate to be used, the viscosity required and the film shape required, but is generally from 0.001 to 80 wt%, preferably from 0.01 to 50 wt%, and more preferably from 0.05 to 40 wt%, based on the dispersant. These crosslinking agents, although they sometimes give rise to crosslinking reactions due to self-condensation, induce crosslinking reactions with the dispersant. In cases where crosslinkable substituents are present in the dispersant, crosslinking reactions are promoted by these crosslinkable substituents.

In the present invention, the following may be added as catalysts for promoting the crosslinking reaction: acidic compounds such as p-toluenesulfonic acid, trifluoromethanesulfonic acid, pyridinium p-toluenesulfonic acid, salicylic acid, sulfosalicylic acid, citric acid, benzoic acid, hydroxybenzoic acid and naphthalenecarboxylic acid; and/or thermal acid generators such as 2,4,4,6-tetrabromocyclohexadienone, benzoin tosylate, 2-nitrobenzyl tosylate and alkyl esters of organic sulfonic acids.

The amount of catalyst added with respect to the dispersant is from 0.0001 to 20 wt%, preferably from 0.0005 to 10 wt%, and more preferably from 0.001 to 3 wt%.

The method of preparing the conductive material-containing composition used to form the undercoat layer is not particularly limited. The dispersion may be prepared by the mixture of, in any order: the CNTs and the solvent, and the dispersant. and also matrix polymer and crosslinking agent that may be optionally used.

The mixture at this time is preferably dispersion treated. Such treatment enables the proportion of the CNTs that are dispersed to be further increased. Examples of dispersion treatment include mechanical treatment in the form of wet treatment using, for example, a ball mill, bead mill or jet mill, or in the form of ultrasonic treatment using a bath-type or probe-type sonicator. Wet treatment using a jet mill and ultrasonic treatment are especially preferred.

The dispersion treatment may be carried out for any length of time, although a period of from about 1 minute to about 10 hours is preferred, and a period of from about 5 minutes to about 5 hours is even more preferred. If necessary, heat treatment may be carried out at this time.

When a crosslinking agent and/or a matrix polymer are used, these may be added following preparation of a mixture composed of the dispersant, the CNTs and the solvent.

The undercoat foil of the invention can be produced by applying the above-described conductive material-containing composition onto at least one side of a current-collecting substrate and then drying the applied composition in air or under heating to form an undercoat layer.

At this time, it is preferable to apply the conductive material-containing composition to the entire side of the current-collecting substrate so as to form an undercoat layer over the entire surface of the current-collecting substrate.

In the present invention, in order to efficiently unite the undercoat foil and the subsequently described metal tab by welding, such as ultrasonic welding, at an undercoat layer region on the foil, the thickness of the undercoat layer is set to not more than 200 nm, preferably not more than 140 nm, and more preferably not more than 80 nm.

On the other hand, to ensure that the undercoat layer functions and to reproducibly obtain batteries having excellent characteristics, the thickness of the undercoat layer per side of the current collector is preferably at least 1 nm, and more preferably at least 30 nm.

The thickness of the undercoat layer in this invention can be determined by, for example, cutting out a test specimen of a suitable size from the undercoat foil, exposing the foil cross-section by, for example, tearing the specimen by hand, and using a scanning electron microscope (SEM) or the like to microscopically examine the cross-sectional region where the undercoat layer is exposed.

The coating weight of the undercoat layer per side of the current-collecting substrate is not particularly limited, so long as the above-indicated film thickness is satisfied. However, from the standpoint of the weldability, such as the ultrasonic weldability, the coating weight is preferably not more than 0.1 g/m², more preferably not more than 0.09 g/m², and even more preferably not more than 0.05 g/m². To ensure that the undercoat layer functions and to reproducibly obtain batteries having excellent characteristics, the coating weight of the undercoat layer per side of the current collector is preferably at least 0.001 g/m², more preferably at least 0.005 g/m², even more preferably at least 0.01 g/m², and still more preferably at least 0.015 g/m².

The coating weight of the undercoat layer in the present invention is expressed as the ratio of the weight (g) of the undercoat layer to its surface area (m²). When the undercoat layer is formed in a pattern, its surface area is the surface area of the undercoat layer alone and does not include the surface area of the current-collecting substrate that lies exposed between patterned areas of the undercoat layer.

The weight of the undercoat layer can be determined by, for example, cutting out a test specimen of a suitable size from the undercoat foil and measuring its weight W0, subsequently stripping the undercoat layer from the undercoat foil and measuring the weight W1 after the undercoat layer has been removed, and calculating the difference therebetween (W0 - W1). Alternatively, the weight of the undercoat layer can be determined by first measuring the weight W2 of the current-collecting substrate, subsequently measuring the weight W3 of the undercoat foil after forming the undercoat layer, and calculating the difference therebetween (W3 - W2).

The method used to strip off the undercoat layer may involve, for example, immersing the undercoat layer in a solvent which dissolves the undercoat layer or causes it to swell, and then wiping off the undercoat layer with a cloth or the like.

The coating weight or film thickness of the undercoat layer can be adjusted by a known method. For example, in cases where the undercoat layer is formed by coating, the coating weight or film thickness can be adjusted by varying the solids concentration of the undercoat layer-forming coating slurry (conductive material-containing composition), the number of coating passes or the clearance of the coating slurry delivery opening in the coater.

When one wishes to increase the coating weight or film thickness, this is done by making the solids concentration higher, increasing the number of coating passes or making the clearance larger. When one wishes to lower the coating weight or film thickness, this is done by making the solids concentration lower, reducing the number of coating passes or making the clearance smaller.

The current-collecting substrate may be suitably selected from among those which have hitherto been used as current-collecting substrates for energy storage device electrodes. For example, use can be made of thin films of copper, aluminum, nickel, gold, silver and alloys thereof, and of carbon materials, metal oxides and conductive polymers. In cases where the electrode assembly is produced by the application of welding such as ultrasonic welding, the use of metal foil made of copper, aluminum, nickel, gold, silver or an alloy thereof is preferred.

The thickness of the current-collecting substrate is not particularly limited, although a thickness of from 1 to 100 µm is preferred in this invention.

Examples of methods for applying the conductive material-containing composition include spin coating, dip coating, flow coating, inkjet coating, spray coating, bar coating, gravure coating, slit coating, roll coating, flexographic printing, transfer printing, brush coating, blade coating and air knife coating. From the standpoint of work efficiency and other considerations, inkjet coating, casting, dip coating, bar coating, blade coating, roll coating, gravure coating, flexographic printing and spray coating are preferred.

The temperature during drying under applied heat, although not particularly limited, is preferably from about 50°C to about 200°C, and more preferably from about 80°C to about 150°C.

The energy storage device electrode of the invention can be produced by forming an active material layer on the undercoat layer of the undercoat foil.

The active material used here may be any of the various types of active materials that have hitherto been used in energy storage device electrodes.

For example, in the case of lithium secondary batteries and lithium-ion secondary batteries, chalcogen compounds capable of intercalating and deintercalating lithium ions, lithium ion-containing chalcogen compounds, polyanion compounds, elemental sulfur and sulfur compounds may be used as the positive electrode active material.

Illustrative examples of such chalcogen compounds capable of intercalating and deintercalating lithium ions include FeS₂, TiS₂, MoS₂, V₂O₆, V₆O₁₃ and MnO₂.

Illustrative examples of lithium ion-containing chalcogen compounds include LiCoO₂, LiMnO₂, LiMn₂O₄, LiMo₂O₄, LiV₃O₈, LiNiO₂ and LiₓNi_{y}M_{1-y}O₂ (wherein M is one or more metal element selected from cobalt, manganese, titanium, chromium, vanadium, aluminum, tin, lead and zinc; and the conditions 0.05 ≤ x ≤ 1.10 and 0.5 ≤ y ≤ 1.0 are satisfied).

An example of a polyanion compound is LiFePO₄.

Illustrative examples of sulfur compounds include Li₂S and rubeanic acid.

The following may be used as the negative electrode active material making up the negative electrode: alkali metals, alkali alloys, at least one elemental substance selected from among group 4 to 15 elements of the periodic table which intercalate and deintercalate lithium ions, as well as oxides, sulfides and nitrides thereof, and carbon materials which are capable of reversibly intercalating and deintercalating lithium ions.

Illustrative examples of the alkali metals include lithium, sodium and potassium. Illustrative examples of the alkali metal alloys include Li-Al, Li-Mg, Li-Al-Ni, Na-Hg and Na-Zn.

Illustrative examples of the at least one elemental substance selected from among group 4 to 15 elements of the periodic table which intercalate and deintercalate lithium ions include silicon, tin, aluminum, zinc and arsenic.

Illustrative examples of the oxides include tin silicon oxide (SnSiO₃), lithium bismuth oxide (Li₃BiO₄), lithium zinc oxide (Li₂ZnO₂) and lithium titanium oxide (Li₄Ti₅O₁₂).

Illustrative examples of the sulfides include lithium iron sulfides (LiₓFeS₂ (0 ≤ x ≤ 3)) and lithium copper sulfides (LiₓCuS (O ≤ x ≤ 3)).

Exemplary nitrides include lithium-containing transition metal nitrides, illustrative examples of which include LiₓM_{y}N (wherein M is cobalt, nickel or copper; 0 ≤ x ≤ 3, and 0 ≤ y ≤ 0.5) and lithium iron nitride (Li₃FeN₄).

Examples of carbon materials which are capable of reversibly intercalating and deintercalating lithium ions include graphite, carbon black, coke, glassy carbon, carbon fibers, carbon nanotubes, and sintered compacts of these.

In the case of electrical double-layer capacitors, a carbonaceous material may be used as the active material.

The carbonaceous material is exemplified by activated carbon, such as activated carbon obtained by carbonizing a phenolic resin and then subjecting the carbonized resin to activation treatment.

The active material layer may be formed by coating an electrode slurry containing the above-described active material, a binder polymer and, optionally, a solvent onto the undercoat layer and then drying in air or under heating.

The region where the active material layer is formed should be suitably selected according to the cell configuration and other characteristics of the device to be used, and is formed on part of a surface of the undercoat layer. When an electrode assembly in which a metal tab and the electrode have been united by welding such as ultrasonic welding is intended for use in a laminate cell or the like, in order to leave a welding region, it is preferable to form the active material layer by coating the electrode slurry over part of the undercoat layer surface. In laminate cell applications, it is especially preferable to form the active material layer by coating the electrode slurry onto all regions of the undercoat layer other than a peripheral edge thereof.

A known material may be suitably selected and used as the binder polymer. Illustrative examples include electrically conductive polymers such as polyvinylidene fluoride (PVdF), polyvinylpyrrolidone, polytetrafluoroethylene, tetrafluoroethylene-hexafluoropropylene copolymers, vinylidene fluoride-hexafluoropropylene copolymers (P(VDF-HFP)), vinylidene fluoride-chlorotrifluoroethylene copolymers (P(VDF-CTFE)), polyvinyl alcohols, polyimides, ethylene-propylene-diene ternary copolymers, styrene-butadiene rubbers, carboxymethylcellulose (CMC), polyacrylic acid (PAA) and polyaniline.

The amount of binder polymer added per 100 parts by weight of the active material is preferably from 0.1 to 20 parts by weight, and more preferably from 1 to 10 parts by weight.

The solvent is exemplified by the solvents mentioned above for the conductive material-containing composition. The solvent may be suitably selected from among these according to the type of binder, although NMP is preferred in the case of water-insoluble binders such as PVdF, and water is preferred in the case of water-soluble binders such as PAA.

The electrode slurry may also contain a conductive additive. Illustrative examples of conductive additives include carbon black, ketjen black, acetylene black, carbon whiskers, carbon fibers, natural graphite, synthetic graphite, titanium oxide, ruthenium oxide, aluminum and nickel.

The method of applying the electrode slurry is exemplified by the same techniques as mentioned above for the conductive material-containing composition.

The temperature when drying under applied heat, although not particularly limited, is preferably from about 50°C to about 400°C, and more preferably from about 80°C to about 150°C.

The electrode may be optionally pressed. Any commonly used method may be employed for pressing, although mold pressing or roll pressing is especially preferred. The pressing force in roll pressing, although not particularly limited, is preferably from 0.2 to 3 metric ton/cm.

The energy storage device of the invention is equipped with the above-described energy storage device electrode. More specifically, it is constructed of at least a pair of positive and negative electrodes, a separator between these electrodes, and an electrolyte, with at least one of the positive and negative electrodes being the above-described energy storage device electrode.

Because this energy storage device is characterized by the use, as an electrode therein, of the above-described energy storage device electrode, the separator, electrolyte and other constituent members of the device that are used may be suitably selected from known materials.

Illustrative examples of the separator include cellulose-based separators and polyolefin-based separators.

The electrolyte may be either a liquid or a solid, and moreover may be either aqueous or non-aqueous, the energy storage device electrode of the invention being capable of exhibiting a performance sufficient for practical purposes even when employed in devices that use a non-aqueous electrolyte.

The non-aqueous electrolyte is exemplified by a non-aqueous electrolyte solution obtained by dissolving an electrolyte salt in a non-aqueous organic solvent.

Specific examples of the electrolyte salt include lithium salts such as lithium tetrafluoroborate, lithium hexafluorophosphate, lithium perchlorate and lithium trifluoromethanesulfonate; quaternary ammonium salts such as tetramethylammonium hexafluorophosphate, tetraethylammonium hexafluorophosphate, tetrapropylammonium hexafluorophosphate, methyltriethylammonium hexafluorophosphate, tetraethylammonium tetrafluoroborate and tetraethylammonium perchlorate; and lithium bis(trifluoromethanesulfonyl)imide and lithium bis(fluorosulfonyl)imide.

Illustrative examples of non-aqueous organic solvents include alkylene carbonates such as propylene carbonate, ethylene carbonate and butylene carbonate, dialkyl carbonates such as dimethyl carbonate, methyl ethyl carbonate and diethyl carbonate, nitriles such as acetonitrile, and amides such as dimethylformamide.

The configuration of the energy storage device is not particularly limited. Cells of various known configurations, such as cylindrical cells, flat wound prismatic cells, stacked prismatic cells, coin cells, flat wound laminate cells and stacked laminate cells may be used.

When used in a coil cell, the energy storage device electrode of the invention may be die-cut in a specific disk shape and used.

For example, a coin cell may be produced by setting a given number of pieces of lithium foil that have been die-cut to a specific shape on a coin cell cap to which a washer and a spacer have been welded, laying an electrolyte solution-impregnated separator of the same shape on top of the foil, stacking the energy storage device electrode of the invention on top of the separator with the active material layer facing down, placing the coin cell case and a gasket thereon and sealing the cell with a coin cell crimper.

In a stacked laminate cell, use may be made of an electrode assembly obtained by welding a metal tab at, in an electrode where an active material layer has been formed on part of the undercoat layer surface, a region of the electrode where the undercoat layer is formed and the active material layer is not formed (welding region).

The electrode making up the electrode assembly may be a single plate or a plurality of plates, although a plurality of plates are generally used in both the positive and negative electrodes.

The plurality of electrode plates used to form the positive electrode are preferably stacked in alternation one plate at a time with the plurality of electrode plates that are used to form the negative electrode. It is preferable at this time to interpose the above-described separator between the positive electrode and the negative electrode.

A metal tab may be welded to a welding region on the outermost electrode of the plurality of electrodes, or a metal tab may be sandwiched and welded between the welding regions on any two adjoining electrode plates.

The metal tab material is not particularly limited, provided it is one that is commonly used in energy storage devices. Examples include metals such as nickel, aluminum, titanium and copper; and alloys such as stainless steel, nickel alloys, aluminum alloys, titanium alloys and copper alloys. From the standpoint of welding efficiency, it is preferable for the tab material to include at least one metal selected from aluminum, copper and nickel.

The metal tab has a shape that is preferably in the form of foil, with the thickness being preferably from about 0.05 to about 1 mm.

Known methods for welding together metals may be used as the welding method. Examples include TIG welding, spot welding, laser welding and ultrasonic welding. As mentioned above, because the undercoat layer of the invention is set to a coating weight that is particularly suitable for ultrasonic welding, it is preferable to join together the electrode and the metal tab by ultrasonic welding.

Ultrasonic welding methods are exemplified by a technique in which a plurality of electrodes are placed between an anvil and a horn, the metal tab is placed at the welding regions, and welding is carried out collectively by the application of ultrasonic energy; and a technique in which the electrodes are first welded together, following which the metal tab is welded.

In this invention, with either of these techniques, not only are the metal tab and the electrodes welded together at the welding regions, the plurality of electrodes are ultrasonically welded to each other at a region where the undercoat layer is formed and the active material layer is not formed.

The pressure, frequency, output power, treatment time, etc. during welding are not particularly limited, and may be suitably set while taking into account the material to be used and the coating weight and other characteristics of the undercoat layer.

A laminate cell can be obtained by placing the electrode assembly produced as described above within a laminate pack, injecting the electrolyte solution described above, and subsequently heat sealing.

The energy storage device obtained in this way has at least one electrode assembly made up of a metal tab and one or a plurality of electrodes, the electrode has a current-collecting substrate, an undercoat layer formed on at least one side of the current-collecting substrate and an active material layer formed on part of the surface of this undercoat layer wherein the undercoat layer includes carbon nanotubes and a dispersant, and has a thickness of from 1 to 200nm. In cases where a plurality of electrodes are used, the electrode assembly has a construction wherein these electrodes are ultrasonically welded to each other at regions thereon where the undercoat layer is formed and the active material layer is not formed, and wherein at least one of the electrodes is ultrasonically welded with a metal tab at a region thereon where the undercoat layer is formed but the active material layer is not formed.

### EXAMPLES

Examples and Comparative Examples are given below to more fully illustrate the invention, although the invention is not limited by these Examples. The apparatuses and instruments used in the Examples were as follows.
(1) Probe-type ultrasonicator (dispersion treatment):
   Apparatus: UIP1000 (Hielscher Ultrasonics GmbH)
(2) Wire bar coater (thin-film production):
   Apparatus: PM-9050MC (SMT Co., Ltd.)
(3) Ultrasonic welder (ultrasonic welding test)
   Apparatus: 2000Xea (40:0.8/40MA-XaeStand), from Emerson Japan, Ltd.
(4) Charge/discharge measurement system (evaluation of secondary battery):
   Instrument: HJ1001 SM8A (Hokuto Denko Corporation)
(5) Micrometer (measurement of binder and active material layer thicknesses):
   Instrument: IR54 (Mitutoyo Corporation)
(6) Homogenizing disperser (mixing of electrode slurry)
   Apparatus: T.K. Robomix (with Homogenizing Disperser model 2.5 (32 mm dia.)), from Primix Corporation
(7) Thin-film spin-type high-speed mixer (mixing of electrode slurry)
   Apparatus: Filmix model 40 (Primix Corporation)
(8) Planetary centrifugal mixer (degassing of electrode slurry)
   Apparatus: Thinky Mixer ARE-310 (Thinky)
(9) Roll press (compressing of electrode):
   Apparatus: HSR-60150H ultra-small desktop hot roll press (Hohsen Corporation)
(10) Scanning electron microscope (SEM):
   Instrument: JSM-7400F (JEOL, Ltd.)

### [1] Production of Undercoat Foil

### [Example 1-1]

First, 0.50 g of PTPA-PBA-SO₃H having the formula shown below and synthesized by the same method as in Synthesis Example 2 of WO 2014/042080 was dissolved as the dispersant in 43 g of 2-propanol and 6.0 g of water as the dispersion media, and 0.50 g of MWCNTs (NC7000, from Nanocyl; diameter, 10 nm) was added to the resulting solution. This mixture was ultrasonically treated for 30 minutes at room temperature (about 25°C) using a probe-type ultrasonicator, thereby giving a black MWCNT-containing dispersion in which MWCNTs were uniformly dispersed and which was free of precipitate.

Next, 3.88 g of the polyacrylic acid (PAA)-containing aqueous solution Aron A-10H (solids concentration, 25.8 wt%; from Toagosei Co., Ltd.) and 46.12 g of 2-propanol were added to 50 g of the resulting MWCNT-containing dispersion and stirring was carried out, giving Undercoat Slurry A1. This was diluted two-fold with 2-propanol, giving Undercoat Slurry A2.

The resulting Undercoat Slurry A2 was uniformly spread with a wire bar coater (OSP 2; wet film thickness, 2 µm) onto aluminum foil (thickness, 15 µm) as the current-collecting substrate and subsequently dried for 10 minutes at 120°C to form an undercoat layer, thereby producing Undercoat Foil B1.

Film thickness measurement was carried out as follows. The undercoat foil fabricated as described above was cut out to a size of 1 cm × 1 cm, and the center portion was torn by hand. A region where the undercoat layer was exposed in the cross-section thereof was examined with the scanning electron microscope at a magnification of 10,000 to 60,000×, and the film thickness was measured. The thickness of the undercoat layer on the undercoat foil B1 measured in this way was about 16 nm.

In addition, Undercoat Slurry A2 was similarly coated as well onto the opposite side of the resulting Undercoat Foil B1 and dried, thereby producing Undercoat Foil C1 having undercoat layers formed on both sides of aluminum foil.

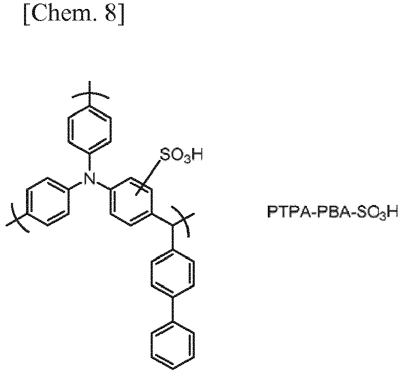

### [Example 1-2]

Aside from using Undercoat Slurry A1 prepared in Example 1-1, Undercoat Foils B2 and C2 were produced in the same way as in Example 1-1. The thickness of the undercoat layer in Undercoat Foil B2 was measured in the same way as in Example 1-1 and found to be 23 nm.

### [Example 1-3]

Aside from using a different wire bar coater (OSP3; wet film thickness, 3 µm), Undercoat Foils B3 and C3 were produced in the same way as in Example 1-2. The thickness of the undercoat layer in Undercoat Foil B3 was measured and found to be 31 nm.

### [Example 1-4]

Aside from using a different wire bar coater (OSP4; wet film thickness, 4 µm), Undercoat Foils B4 and C4 were produced in the same way as in Example 1-2. The thickness of the undercoat layer in Undercoat Foil B4 was measured and found to be 41 nm.

### [Example 1-5]

Aside from using a different wire bar coater (OSP6; wet film thickness, 6 µm), Undercoat Foils B5 and C5 were produced in the same way as in Example 1-2. The thickness of the undercoat layer in Undercoat Foil B5 was measured and found to be 60 nm.

### [Example 1-6]

Aside from using a different wire bar coater (OSP8; wet film thickness, 8 µm), Undercoat Foils B6 and C6 were produced in the same way as in Example 1-2. The thickness of the undercoat layer in Undercoat Foil B6 was measured and found to be 80 nm.

### [Comparative Example 1-1]

Aside from using a different wire bar coater (OSP22; wet film thickness, 22 µm), Undercoat Foils B7 and C7 were produced in the same way as in Example 1-2. The thickness of the undercoat layer in Undercoat Foil B7 was measured and found to be 210 nm.

### [Comparative Example 1-2]

Aside from using a different wire bar coater (OSP30; wet film thickness, 30 µm), Undercoat Foils B8 and C8 were produced in the same way as in Example 1-2. The thickness of the undercoat layer in Undercoat Foil B8 was measured and found to be 250 nm.

### [Ultrasonic Welding Test]

Ultrasonic welding tests were carried out by the following method on each of the undercoat foils produced in Examples 1-1 to 1-6 and Comparative Examples 1-1 and 1-2.

Using an ultrasonic welder from Emerson Japan, Ltd. (2000Xea, 40:0.8/40MA-XaeStand), five pieces of undercoat foil having undercoat layers formed on both sides were stacked on top of an aluminum tab (Hohsen Corporation; thickness, 0.1 mm; width, 5 mm) on an anvil, a horn was brought down onto the foil from above, and welding was carried out by applying ultrasonic vibrations. The welding surface area was set to 3×12 mm. In cases where, after welding, the undercoat foil in contact with the horn did not tear but the foil did tear when one tried to separate the tab and the undercoat foil, the weldability was rated as "○"; in cases where the tab and the foil separated after welding, the weldability was rated as "× ". The results are shown in Table 1.

**[Table 1]**

| | Undercoat foil | Film thickness (nm) | Weldability |
|---|---|---|---|
| Example 1-1 | C1 | 16 | ∘ |
| Example 1-2 | C2 | 23 | ∘ |
| Example 1-3 | C3 | 31 | ∘ |
| Example 1-4 | C4 | 41 | ∘ |
| Example 1-5 | C5 | 60 | ∘ |
| Example 1-6 | C6 | 80 | ∘ |
| Comparative Example 1-1 | C7 | 210 | × |
| Comparative Example 1-2 | C8 | 250 | × |

As shown in Table 1, in cases where the undercoat layer had a thickness greater than 200 nm, the welding strength between the tab and the undercoat foil was insufficient and separation ended up arising between the tab and the undercoat foil. In cases where the undercoat layer had a thickness of not more than 200 nm, the welding strength between the tab and the undercoat foil was sufficient and the undercoat foil tore when an attempt was made to separate the tab and the undercoat foil.

From the above, it was confirmed that setting the thickness of the undercoat layer to not more than 200 nm is essential for welding the undercoat foil and metal tab to a sufficient strength.

### [2] Production of Electrode and Lithium Ion Battery Using LFP as the Active Material

### [Example 2-1]

The following were mixed together in a homogenizing disperser at 3,500 rpm for 5 minutes: 17.3 g of lithium iron phosphate (LFP, from TATUNG FINE CHEMICALS CO.) as the active material, 12.8 g of an NMP solution of polyvinylidene fluoride (PVdF) (12 wt%; KF Polymer L#1120, from Kuraray Co., Ltd.) as the binder, 0.384 g of acetylene black as the conductive additive and 9.54 g of N-methylpyrrolidone (NMP). Next, using a thin-film spin-type high-speed mixer, mixing treatment was carried out for 60 seconds at a peripheral speed of 20 m/s, in addition to which deaeration was carried out for 30 seconds at 2,200 rpm in a planetary centrifugal mixer, thereby producing an electrode slurry (solids concentration, 48 wt %; LFP : PVdF : AB = 90:8:2 (weight ratio).

The resulting electrode slurry was uniformly spread (wet film thickness, 200 µm) onto Undercoat Foil B1 produced in Example 1, following which the slurry was dried at 80°C for 30 minutes and then at 120°C for 30 minutes, thereby forming an active material layer on the undercoat layer. The active material layer was then pressed with a roll press, producing an electrode having an active material layer thickness of 50 µm.

The electrode thus obtained was die-cut in the shape of a 10 mm diameter disk and the weight was measured, following which the electrode disk was vacuum dried at 100°C for 15 hours and then transferred to a glovebox filled with argon.

A stack of six pieces of lithium foil (Honjo Chemical Corporation; thickness, 0.17 mm) that had been die-cut to a diameter of 14 mm was set on a 2032 coin cell (Hohsen Corporation) cap to which a washer and a spacer had been welded, and one piece of separator (Celgard 2400) die-cut to a diameter of 16 mm that had been impregnated for at least 24 hours with an electrolyte solution (Kishida Chemical Co., Ltd.; an ethylene carbonate : diethyl carbonate =1:1 (volume ratio) solution containing 1 mol/L of lithium hexafluorophosphate as the electrolyte) was laid on the foil. The electrode was then placed on top with the active material-coated side facing down. One drop of electrolyte solution was deposited thereon, after which the coin cell case and gasket were placed on top and sealing was carried out with a coin cell crimper. The cell was then left at rest for 24 hours, giving a secondary battery for testing.

### [Example 2-2]

Aside from using Undercoat Foil B2 obtained in Example 1-2, a secondary battery for testing was produced in the same way as in Example 2-1.

### [Example 2-3]

Aside from using Undercoat Foil B3 obtained in Example 1-2, a secondary battery for testing was produced in the same way as in Example 2-1.

### [Example 2-4]

Aside from using Undercoat Foil B4 obtained in Example 1-2, a secondary battery for testing was produced in the same way as in Example 2-1.

### [Example 2-5]

Aside from using Undercoat Foil B5 obtained in Example 1-2, a secondary battery for testing was produced in the same way as in Example 2-1.

### [Example 2-6]

Aside from using Undercoat Foil B6 obtained in Example 1-2, a secondary battery for testing was produced in the same way as in Example 2-1.

### [Comparative Example 2-1]

Aside from using Undercoat Foil B7 obtained in Comparative Example 1-1, a secondary battery for testing was produced in the same way as in Example 2-1.

### [Comparative Example 2-2]

Aside from using Undercoat Foil B8 obtained in Comparative Example 1-2, a secondary battery for testing was produced in the same way as in Example 2-1.

### [Comparative Example 2-3]

Aside from using pure aluminum foil, a secondary battery for testing was produced in the same way as in Example 2-1.

Using the charge/discharge measurement system, the physical properties of the electrodes were evaluated under the following conditions for the lithium-ion secondary batteries produced in above Examples 2-1 to 2-6 and Comparative Examples 2-1 to 2-3. Table 2 shows the average voltage during 5C discharge.

| | |
|---|---|
| Current: | Constant-current charging at 0.5C, and constant-current discharging at 5C (the capacity of LFP was set to 170 mAh/g) |
| Cut-off voltage: | 4.50 V - 2.00 V |
| Temperature: | room temperature |

**[Table 2]**

| | Undercoat foil | Film thickness (nm) | Weldability | Average voltage during 5C discharge (V) |
|---|---|---|---|---|
| Example 2-1 | B1 | 16 | ○ | 2.91 |
| Example 2-2 | B2 | 23 | ○ | 3.01 |
| Example 2-3 | B3 | 31 | ○ | 3.05 |
| Example 2-4 | B4 | 41 | ○ | 3.05 |
| Example 2-5 | B5 | 60 | ○ | 3.05 |
| Example 2-6 | B6 | 80 | ○ | 3.06 |
| Comparative Example 2-1 | B7 | 210 | × | 3.05 |
| Comparative Example 2-2 | B8 | 250 | × | 3.03 |
| Comparative Example 2-3 | - | - | - | 2.52 |

As shown in Table 2, in the battery shown in Comparative Example 2-3 that used pure aluminum foil on which an undercoat layer was not formed, the battery resistance was high and so the average voltage during 5C discharge was confirmed to be low. By contrast, as shown in Examples 2-1 to 2-6 and in Comparative Examples 2-1 and 2-2 in which an undercoat foil was used, the battery resistance decreased and so the average voltage during 5C discharge was confirmed to rise.

From these results, it was confirmed that, by setting the thickness of the undercoat layer to from 1 to 200 nm, an undercoat foil that is weldable and enables a low-resistance energy storage device to be obtained can be produced.

## Claims

1. An energy storage device electrode, comprising a current-collecting substrate and an undercoat layer formed on at least one side of the current-collecting substrate and an active material layer formed on a part of a surface of the undercoat layer,
wherein the undercoat layer includes carbon nanotubes and a dispersant, and has a thickness of from 1 to 200 nm.

2. The energy storage device electrode of claim 1, wherein the undercoat layer has a thickness of from 1 to 140 nm.

3. The energy storage device electrode of claim 2, wherein the undercoat layer has a thickness of from 30 to 80 nm.

4. The energy storage device electrode of any one of claims 1 to 3, wherein the dispersant is a triarylamine-based highly branched polymer or a pendant oxazoline group-containing vinyl polymer.

5. The energy storage device electrode of any one of claims 1 to 4, wherein the undercoat layer is formed on at least one side of the current-collecting substrate in such a way as to cover the entire side.

6. The energy storage device electrode of any one of claims 1 to 5, wherein the undercoat layer includes a matrix polymer.

7. The energy storage device electrode of any one of claims 1 to 6, wherein the current-collecting substrate is aluminum foil or copper foil.

8. The energy storage device electrode of claim 1 to 7, wherein the active material layer is formed in such a way as to cover all regions of the undercoat layer other than a peripheral edge thereof.

9. An energy storage device comprising the energy storage device electrode of claims 1 to 8.

10. The energy storage device of claim 9 comprising at least one electrode assembly comprised of one or a plurality of the electrodes of claims 1 to 8 and a metal tab, wherein at least one of the electrodes has been ultrasonically welded to the metal tab at a region of the electrode where the undercoat layer is formed and the active material layer is not formed.

11. The energy storage device of claim 10, wherein the metal tab comprises at least one metal selected from the group consisting of aluminum, copper and nickel.

12. A method for manufacturing an energy storage device that uses one or a plurality of the electrodes of claims 1 to 8, which method comprises the step of ultrasonically welding at least one of the electrodes to a metal tab at a region of the electrode where the undercoat layer is formed and the active material layer is not formed.

## Patentansprüche

1. Energiespeichervorrichtungselektrode, die ein Stromsammelsubstrat und eine Grundschicht, die auf zumindest einer Seite des Stromsammelsubstrats ausgebildet ist, und eine aktive Materialschicht umfasst, die auf einem Teil der Grundschicht ausgebildet ist,
wobei die Grundschicht Kohlenstoffnanoröhrchen und ein Dispergiermittel umfasst und eine Dicke von 1 bis 200 nm aufweist.

2. Energiespeichervorrichtungselektrode nach Anspruch 1, wobei die Grundschicht eine Dicke von 1 bis 140 nm aufweist.

3. Energiespeichervorrichtungselektrode nach Anspruch 2, wobei die Grundschicht eine Dicke von 30 bis 80 nm aufweist.

4. Energiespeichervorrichtungselektrode nach einem der Ansprüche 1 bis 3, wobei das Dispergiermittel ein hochverzweigtes Polymer auf Triarylaminbasis oder ein seitenständiges Oxazolingruppen-hältiges Vinylpolymer ist.

5. Energiespeichervorrichtungselektrode nach einem der Ansprüche 1 bis 4, wobei die Grundschicht so auf zumindest einer Seite des Stromsammelsubstrats ausgebildet ist, dass die gesamte Seite bedeckt ist.

6. Energiespeichervorrichtungselektrode nach einem der Ansprüche 1 bis 5, wobei die Grundschicht ein Matrixpolymer umfasst.

7. Energiespeichervorrichtungselektrode nach einem der Ansprüche 1 bis 6, wobei das Stromsammelsubstrat Aluminiumfolie oder Kupferfolie ist.

8. Energiespeichervorrichtungselektrode nach Anspruch 1 bis 7, wobei die aktive Materialschicht so ausgebildet ist, dass alle Bereiche der Grundschicht bis auf einen Außenrand bedeckt sind.

9. Energiespeichervorrichtung, die eine Energiespeichervorrichtungselektrode nach Anspruch 1 bis 8 umfasst.

10. Energiespeichervorrichtung nach Anspruch 9, die zumindest eine Elektrodenanordnung umfasst, die aus einer oder einer Vielzahl von Elektroden nach Anspruch 1 bis 8 und einer Metalllasche besteht, wobei zumindest eine der Elektroden in einem Bereich der Elektrode, in dem die Grundschicht ausgebildet und die aktive Materialschicht nicht ausgebildet ist, an die Metalllasche ultraschallgeschweißt ist.

11. Energiespeichervorrichtung nach Anspruch 10, wobei die Metalllasche zumindest ein Metall umfasst, das aus der aus Aluminium, Kupfer und Nickel bestehenden Gruppe ausgewählt ist.

12. Verfahren zur Herstellung einer Energiespeichervorrichtung, die eine oder eine Vielzahl von Elektroden nach Anspruch 1 bis 8 nutzt, wobei das Verfahren den Schritt des Ultraschallschweißens zumindest einer der Elektroden an eine Metalllasche in einem Bereich der Elektrode, in dem die Grundschicht ausgebildet und die aktive Materialschicht nicht ausgebildet ist, umfasst.

## Revendications

1. Électrode de dispositif de stockage d'énergie, comprenant un substrat collecteur de courant et une couche formant sous-couche formée sur au moins un côté du substrat collecteur de courant et une couche de matériau actif formée sur une partie d'une surface de la couche formant sous-couche,
dans laquelle la couche formant sous-couche comprend des nanotubes de carbone et un dispersant, et a une épaisseur de 1 à 200 nm.

2. Électrode de dispositif de stockage d'énergie selon la revendication 1, dans laquelle la couche formant sous-couche a une épaisseur de 1 à 140 nm.

3. Électrode du dispositif de stockage d'énergie selon la revendication 2, dans laquelle la couche formant sous-couche a une épaisseur de 30 à 80 nm.

4. Électrode de dispositif de stockage d'énergie selon l'une quelconque des revendications 1 à 3, dans laquelle le dispersant est un polymère hautement ramifié à base de triarylamine ou un polymère vinylique contenant un groupe oxazoline pendant.

5. Électrode de dispositif de stockage d'énergie selon l'une quelconque des revendications 1 à 4, dans laquelle la couche formant sous-couche est formée sur au moins un côté du substrat collecteur de courant de manière à recouvrir le côté entier.

6. Électrode de dispositif de stockage d'énergie selon l'une quelconque des revendications 1 à 5, dans laquelle la couche formant sous-couche comprend un polymère matriciel.

7. Électrode de dispositif de stockage d'énergie selon l'une quelconque des revendications 1 à 6, dans laquelle le substrat collecteur de courant est une feuille d'aluminium ou une feuille de cuivre.

8. Électrode de dispositif de stockage d'énergie selon les revendications 1 à 7, dans laquelle la couche de matériau actif est formée de manière à recouvrir toutes les régions de la couche formant sous-couche autres qu'un bord périphérique de celle-ci.

9. Dispositif de stockage d'énergie comprenant l'électrode de dispositif de stockage d'énergie selon les revendications 1 à 8.

10. Dispositif de stockage d'énergie selon la revendication 9 comprenant au moins un ensemble d'électrode composé d'une ou d'une pluralité d'électrodes selon les revendications 1 à 8 et d'une languette métallique, dans lequel au moins une des électrodes a été soudée par ultrasons à la languette métallique au niveau d'une région de l'électrode où la couche formant sous-couche est formée et où la couche de matériau actif n'est pas formée.

11. Dispositif de stockage d'énergie selon la revendication 10, dans lequel la languette métallique comprend au moins un métal choisi dans le groupe constitué d'aluminium, de cuivre et de nickel.

12. Procédé de fabrication d'un dispositif de stockage d'énergie qui utilise une ou une pluralité des électrodes selon les revendications 1 à 8, lequel procédé comprend l'étape consistant à souder par ultrasons au moins une des électrodes à une languette métallique au niveau d'une région de l'électrode où la couche formant sous-couche est formée et où la couche de matériau actif n'est pas formée.
